# EUROPEAN PATENT APPLICATION

(11) **EP 3 293 301 A1**
(43) Date of publication of application: **14.03.2018**
(21) Application number: 15891228.7
(22) Date of filing: 23.11.2015
(51) Int. Cl.: D06F 37/30, F16L 23/18

(54) **SHAFT SEAL INSTALLATION STRUCTURE OF WASHING MACHINE INNER BARREL**

(30) Priority: 05.05.2015 CN 201510222270
(71) Applicant: Qingdao Haier Washing Machine Co., Ltd., Shandong 266101 (CN)
(72) Inventor: LV, Peishi, Qingdao Shandong 266101 (CN); YANG, Lin, Qingdao Shandong 266101 (CN); TIAN, Yun, Qingdao Shandong 266101 (CN); ZHANG, Gangjin, Qingdao Shandong 266101 (CN); IMAI, Shunji, Qingdao Shandong 266101 (CN)
(74) Representative: Beck & Rössig European Patent Attorneys
(86) International application number: PCT/CN2015/095300
(87) International publication number: WO 2016/176985

(57) **Abstract**

An inner barrel shaft seal mounting structure of a washing machine comprises an inner barrel flange (11) and an inner barrel shaft (13) which are arranged at an inner barrel bottom, wherein the upper end part of the inner barrel shaft (13) is a flange structure, the inner barrel flange (11) is connected with an inner barrel shaft flange (10), and a composite sealing gasket (1) is arranged between the inner barrel flange (11) and the inner barrel shaft flange (13), the composite sealing gasket comprises a metallic framework (2) and a rubber gasket (3) which are combined into one piece through vulcanization. According to the scheme, the composite sealing gasket (1) is of an annular flat structure and is provided with a bolt through hole (6), an inner teeth (5), a positioning structure (8) and an annular convex rib (4). The scheme has functions of gasket and seal, and can bear a relatively high radial force and a relatively high axial force which prevents from phenomena such as loosening, shaking and water-leaking between the inner barrel shaft flange and the inner barrel flange are. The scheme has the characteristics of simple structure and good sealing effect.

## Description

### TECHNICAL FIELD

The present invention relates to the field of washing machines, specifically relates to an inner barrel bottom sealing structure of a washing machine and particularly relates to an inner barrel shaft seal mounting structure of a washing machine.

### BACKGROUND

For a conventional impeller type washing machine, a space between side walls of an inner drum and an outer drum needs to be filled with water during clothes washing, and therefore, the inner drum structure does not need to be sealed, especially for the inner drum bottom. In order to drain water quickly, a gap exists between the inner drum bottom and an inner drum flange, and a water outlet hole will be even added on the basis of guaranteeing the strength of the inner drum bottom.

However, in the impeller type washing machine with such a structure, water between the inner drum and the outer drum does not participate in washing, and water which truly participates in washing is only the part in the inner drum, so that the waste of water is large. In addition, too much water between the inner drum and the outer drum will lower the concentration of a detergent/washing powder in the washing water. A conventional casing-drum-integrated full-automatic impeller washing machine solves the problem of water waste and meanwhile solves the problem of pollution to clothes. A water sealing structure of the conventional casing-drum-integrated full-automatic impeller washing machine achieves water seal in a manner that a casing drum and a driving sleeve shaft of the washing machine are in sealed connection through a spiral-corrugation flexible rubber water sealing sleeve, so that the purposes of rising, falling and damping of a coasting body as well as sealed connection of the casing drum with the driving sleeve shaft are achieved. For example, a patent application which has an application number of 200710137234.0 discloses a spiral-corrugation flexible rubber water sealing sleeve. Aiming at the special requirements of the casing-drum-integrated full-automatic impeller washing machine on water sealing, the spiral-corrugation flexible rubber water sealing sleeve provided by the invention comprises a one-piece bowl-shaped curtained thin-walled rubber product which consists of an outer ring section, a spiral corrugation section and an inner sleeve section. And the spiral corrugation section is provided with protruded water-wavy threads which are rotatably spread out from inside to outside. During application, spiral corrugations of the spiral-corrugation flexible rubber water sealing sleeve can freely expand and contract along three-dimensional directions, thereby adapting to the characteristics of rising/falling and twisting motion of the coasting body and blocking the transfer of vibration of the coasting body to the casing drum and a base to the maximum. And during the drainage of the casing-drum-integrated full-automatic impeller washing machine, water in corrugation grooves will automatically flow out along the spiral corrugations without retention.

However, the scheme provided by the invention has the defect that when the washing machine does centrifugal dewatering work, the spiral-corrugation flexible rubber water sealing sleeve bears an intense radial force as being connected with two different rigid bodies, and thus, the disadvantages that the spiral-corrugation flexible rubber water sealing sleeve is skewed, the rigidity is insufficient, the reliability is poor, and the like are caused.

In view of this, the present invention is provided.

### SUMMARY

An object of the present invention is to overcome defects in the prior art and provide an inner barrel shaft seal mounting structure of a washing machine, so that gasket and seal functions are achieved, and while phenomena of loosening, shaking and water-leaking between two rigid parts during dewatering of the washing machine are prevented.

In order to achieve the object, the present invention adopts a technical scheme as follows: an inner barrel shaft seal mounting structure of a washing machine comprising an inner barrel flange arranged at an inner barrel bottom and an inner barrel shaft, wherein an upper end part of the inner barrel shaft is a flange mounting structure, the inner barrel flange being in seal connection with an inner barrel shaft flange, and a composite sealing gasket being arranged between the inner barrel flange and the inner barrel shaft flange, wherein the composite sealing gasket comprises a metallic framework and a rubber gasket which are combined into one piece through vulcanization.

In some embodiments, the composite sealing gasket is of a flat annular structure, a center hole is formed in the middle of the composite sealing gasket, and a first annular convex rib is arranged on an upper surface and/or a lower surface of the composite sealing gasket around of the center hole.

In some embodiments, a plurality of bolt through holes are distributed in a circumference direction of the composite sealing gasket, a second annular convex rib is arranged at an outer ring of each bolt through hole on an upper surface and/or a lower surface of the composite sealing gasket, preferably, a segmented convex rib is connected between every two adjacent second annular convex ribs, and more preferably, circumference traces of a plurality of segmented convex ribs are same and are concentric with the first annular convex rib.

In some embodiments, a positioning structure is arranged between the composite sealing gasket and the inner barrel shaft flange, preferably, the positioning structure is a positioning column which protrude from a surface of the composite sealing gasket, and a positioning hole matched with the positioning column is formed in the inner barrel shaft flange.

In some embodiments, both the metallic framework and the rubber gasket are of annular structures, and are concentrically arranged and bonded together with each other along the radial direction through vulcanization.

In some embodiments, the rubber gasket is arranged at an inner ring of the metallic framework and forms a lining of the metallic framework, and the rubber gasket and the metallic framework are combined to form the composite sealing gasket with the flat annular structure.

In some embodiments, the inner ring of the metallic framework serves as a combination part which is bonded to the rubber gasket through vulcanization, and the combination part is formed by multiple sections of curves which are successively connected.

In some embodiments, the rubber gasket comprises an annular rubber body, an outer ring of the annular rubber body is bonded to the metallic framework through vulcanization, an inner ring of the annular rubber body forms a center hole, a first annular convex rib is arranged on an upper surface and/or a lower surface of the annular rubber body around of the center hole, a plurality of bolt through holes are distributed outside the first annular convex rib in a circumference direction, and a second annular convex rib is arranged at an outer ring of each bolt through hole on the upper surface and/or lower surface of the annular rubber body.

In some embodiments, a segmented convex rib is connected between every two adjacent second annular convex ribs, and preferably, circumference traces of a plurality of segmented convex ribs are same and are concentric with the first annular convex rib.

In some embodiments, horizontal planes of the upper and lower surfaces of the annular rubber body are same with that of the upper and lower surfaces of the metallic framework respectively, there is a smooth transition at a vulcanization bonding position, the first annular convex rib and the second annular convex ribs protrude from the surface of the composite sealing gasket, and preferably, protruding heights of the first annular convex rib and second annular convex ribs are same. The upper and lower surfaces of the metallic framework and the upper and lower surfaces of the rubber gasket are consistent in height, so that both the metallic framework and the rubber gasket can be in good contact, and the metallic framework can sufficiently resist the action of a radial force and the action of an axial force.

After the inner barrel flange and the inner barrel shaft flange are fastened, the second annular convex rib is compressed, the inner diameter of the bolt through hole of the composite sealing gasket is reduced due to the compression of the second annular convex rib, and a rubber lining of the composite sealing gasket and bolts exert a certain sealing action.

In some embodiments, at least one positioning column protrudes from the lower surface of the annular rubber body, and a positioning hole matched with the positioning column is formed in the inner barrel shaft flange and is located between two bolt through holes.

In some embodiments, both the bolt through hole and the positioning column partially protrude from an outer ring of the annular rubber body to form arc-shaped protrusions, and a plurality of arc-shaped notches matched with the arc-shaped protrusions at the outer ring of the annular rubber body are formed in the inner ring of the metallic framework. By the structure, an area of contact between the metallic framework and the rubber gasket is increased, and the bonding strength between the metallic framework and the rubber gasket is improved, and the relative bonding strength between the metallic framework and the rubber gasket is further improved. The composite sealing gasket can bear a relatively high radial force and a relatively high axial force. Meanwhile, the safety of connection between the metallic framework and the rubber gasket is guaranteed, and the service life of the composite sealing gasket is prolonged.

The positioning column has a height of 3mm to 12mm. During the mounting of the washing machine, firstly, an inner barrel shaft penetrates through an outer barrel bottom, the inner barrel shaft and the outer barrel bottom are sealed, a reducer and a motor are mounted at the outer barrel bottom, . Then, the composite sealing gasket is positioned at the inner barrel shaft flange. Then the inner barrel flange fixed to an inner barrel bottom is placed on the composite sealing gasket. And finally, bolts are mounted and fixed. During mounting, the composite sealing gasket is positioned on the inner barrel shaft flange through the positioning columns, and the inner barrel flange, the composite sealing gasket and the inner barrel shaft flange are relatively fixed by using the bolts to penetrate through the inner barrel flange, the composite sealing gasket and the inner barrel shaft flange sequentially.

The present invention relates to a full-automatic washing machine which comprises an outer barrel and an inner barrel arranged in the outer barrel, and a water outlet hole is formed in the upper part of the inner barrel. And a part, below the water outlet hole, of the inner barrel is a water containing chamber structure of which both a circumferential wall and a bottom wall are sealed.

According to the washing machine, only the upper part of the inner barrel is provided with the water outlet hole, and the lower part of the inner barrel has no hole and is sealed, so that washing water does not enter an area between the inner barrel and the outer barrel. And only a proper volume of water is required to be injected into the inner barrel, thus, the aim of greatly saving the washing water is achieved, and the water saving rate reaches 30% to 40%. Meanwhile, the dosage of additives such as a detergent and auxiliaries during each time of washing is reduced, and the washing cost is reduced. In addition, the area between the inner barrel and the outer barrel does not participate in washing any more, and retained dirt and bacteria of the area between the inner barrel and the outer barrel cannot become in water flow contact with clothes in the inner barrel, so that the cross infection of the bacteria can be effectively avoided, and the washing machine is more sanitary, more environmentally friendly and safer in use. During dewatering drainage, water flow is driven to flow upwards and drained from the water outlet hole by the high-speed rotation of the inner barrel, thread chips floating in the water cannot be remained on the clothes and are discharged completely, and thus, the washing is cleaner.

By adopting the technical scheme, the present invention has the following beneficial effects:
1. The composite sealing gasket is mounted between the inner barrel shaft flange and the inner barrel flange and connected with the inner barrel shaft, and the composite sealing gasket is formed by the metallic framework and a rubber material which are combined through vulcanization, so that a radial force and an axial force of rigid connection generated between the inner barrel shaft flange and the inner barrel flange during dewatering operation are resisted. And the loosening, shaking and water leaking of the inner barrel shaft flange and the inner barrel flange and water leaking of the inner barrel shaft are prevented.
2. The composite sealing gasket is provided with the positioning structure, so that the condition that the difficulty of a bolt fixing and adjusting process is improved because an area of contact among the inner barrel shaft flange, the composite sealing gasket and the inner barrel flange is too large and can easily cause relative movement during the mounting of the washing machine can be overcome.

The specific embodiments of the present invention are further described in detail below with reference to the drawings.

### BRIEF DESCRIPTION OF THE DRAWINGS

Fig. 1: a schematic diagram of a composite sealing gasket of the present invention;
Fig. 2: a front view of a composite sealing gasket of the present invention;
Fig. 3: a schematic diagram of an inner barrel shaft seal structure of a washing machine of the present invention;
Fig. 4: a local schematic diagram of an inner barrel shaft seal structure of a washing machine of the present invention;
Fig. 5: an assembly drawing of a composite sealing gasket of the present invention;
Fig. 6: a schematic diagram of a segmented convex rib of a composite sealing gasket of the present invention; and
Fig. 7: an assembly schematic diagram of an inner barrel shaft seal structure of a washing machine of the present invention.

Reference Signs: 1. composite sealing gasket, 2. metallic framework, 3. rubber gasket, 4. first annular convex rib, 5. arc-shaped inner tooth, 6. bolt through hole, 7. second annular convex rib, 8. positioning structure, 9. center hole, 10. inner barrel shaft flange, 11. inner barrel flange, 12. bolt, 13. inner barrel shaft, 14. non-circular center hole, 15. segmented convex rib, 16. arc-shaped protrusion, 17. arc-shaped notch, and 18. positioning hole.

### DETAILED DESCRIPTION

In order to make the above-mentioned objects, features and advantages of the present invention more obvious and comprehensible, the present invention is further described in detail below with reference to the drawings and the specific embodiments.

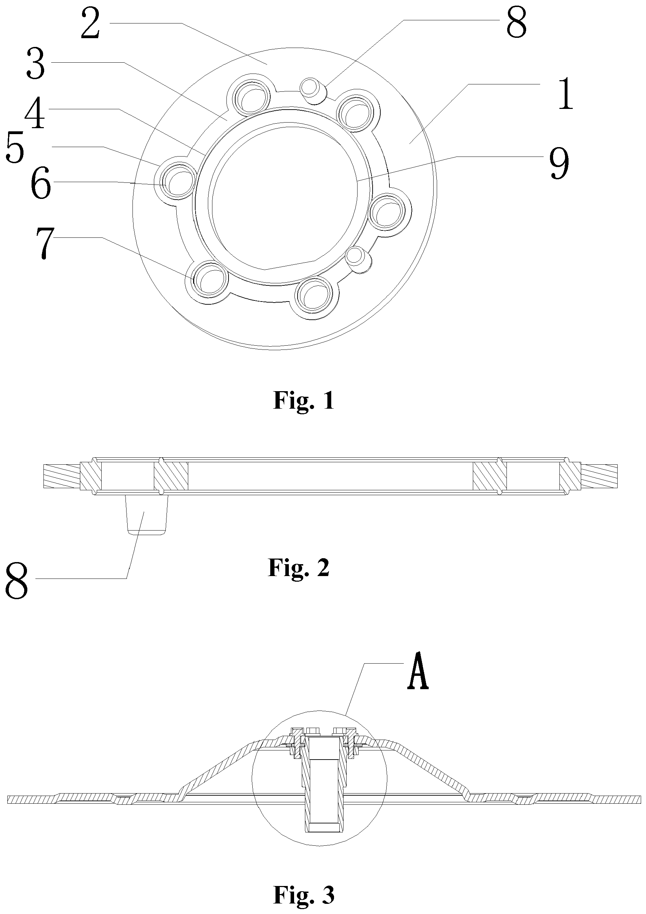

As shown in Fig. 1 to Fig. 7, an inner barrel shaft seal mounting structure of a washing machine, provided by the present invention, comprises an inner barrel flange 11 and an inner barrel shaft 13 which are arranged at an inner barrel bottom. The upper end part of the inner barrel shaft 13 is a flange mounting structure, the inner barrel flange 11 is in seal connection with an inner barrel shaft flange 10. A composite sealing gasket 1 is arranged between the inner barrel flange 11 and the inner barrel shaft flange 10. The composite sealing gasket 1 comprises a metallic framework 2 and a rubber gasket 3 which are combined into one piece through vulcanization.

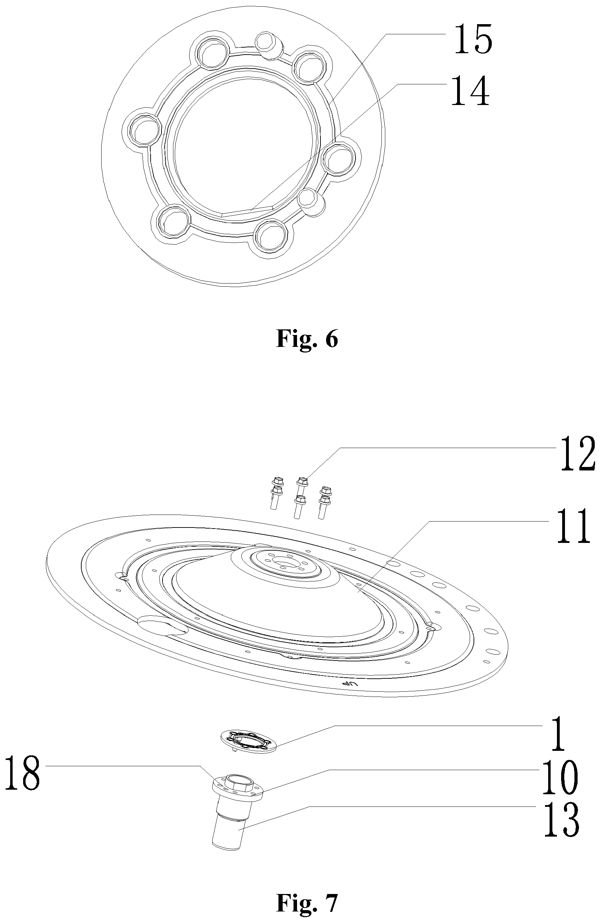

As shown in Fig. 7, the inner barrel bottom of the washing machine is sealed, i.e., the inner barrel flange 11 is in seal connection with an inner barrel bottom. The upper end part of the inner barrel shaft 13 is the flange mounting structure, the inner barrel flange 11 is also in seal connection with the inner barrel shaft flange 10, and the inner barrel is a water containing structure.

### Embodiment I

As shown in Fig. 1, in this embodiment, a composite sealing gasket 1 is of a flat annular structure. A center hole 9 is formed in the middle of the composite sealing gasket 1. And a first annular convex rib 4 is arranged on the upper surface and/or lower surface of the composite sealing gasket 1 around the center hole 9.

### Embodiment II

As shown in Fig. 1, in this embodiment, a plurality of bolt through holes 6 are distributed in the composite sealing gasket 1 in a circumference direction. A second annular convex rib 7 is arranged at an outer ring of each bolt through hole 6 on the upper surface and/or lower surface of the composite sealing gasket 1. Preferably, a segmented convex rib 15 is connected between every two adjacent second annular convex ribs 7. And more preferably, circumference traces of a plurality of segmented convex ribs 15 are same and are concentric with the first annular convex rib 4.

### Embodiment III

As shown in Fig. 2 and Fig. 7, in this embodiment, the positioning structures 8 protrude from the surface of the composite sealing gasket 1. Preferably, the positioning structures 8 are positioning columns, and positioning holes 18 matched with the positioning columns are formed in the inner barrel shaft flange 10.

Preferably, in this embodiment, at least one positioning column protrudes from the lower surface of an annular rubber body, the positioning column is located between two bolt through holes 6. And the positioning hole 18 matched with the positioning column is formed in the inner barrel shaft flange 10.

### Embodiment IV

As shown in Fig. 6, in this embodiment, the positioning structure of the composite sealing gasket adopts a positioning column manner and/or adopts a manner that a non-circular center hole 14 is matched with the inner barrel shaft 13.

### Embodiment V

As shown in Fig. 1, in this embodiment, both the metallic framework 2 and the rubber gasket 3 are of annular structures and are bonded with each other through vulcanization. The rubber gasket 3 is arranged at an inner ring of the metallic framework 2 and forms a lining of the metallic framework 2. The rubber gasket 3 and the metallic framework 2 are combined to form the flat annular composite sealing gasket 1. An inner ring of the metallic framework 2 serves as a combination part which is bonded to the rubber gasket 3 through vulcanization, and the combination part is formed by multiple sections of curves which are successively connected.

### Embodiment VI

As shown in Fig. 1 and Fig. 6, in this embodiment, the rubber gasket 3 comprises an annular rubber body. An outer ring of the annular rubber body is bonded to the metallic framework 2 through vulcanization. An inner ring of the annular rubber body forms a center hole 9, and a first annular convex rib 4 is arranged on the upper surface and/or lower surface of the annular rubber body around the center hole 9. A plurality of bolt through holes 6 are distributed outside the first annular convex rib 4 in a circumference direction. And a second annular convex rib 7 is arranged at an outer ring of each bolt through hole 6 on the upper surface and/or lower surface of the annular rubber body. A segmented convex rib 15 is connected between every two adjacent second annular convex ribs 7. And preferably, circumference traces of a plurality of segmented convex ribs are same and are concentric with the first annular convex rib 4.

### Embodiment VII

As shown in Fig. 6, in this embodiment, horizontal planes of the upper and lower surfaces of the annular rubber body are same with that of the upper and lower surfaces of the metallic framework 2 respectively. There is a smooth transition at a vulcanization bonding position. Protruding heights of the first annular convex rib 4 and the second annular convex ribs 7 protrude from the surface of the composite sealing gasket 1 are same.

Preferably, in this embodiment, the protruding height of the first annular convex rib 4 and the second annular convex ribs 7 are relatively small, for example 0.8cm. Thus, the composite sealing gasket 1 can exert a better sealing action, and the condition that a gap is still generated after the inner barrel flange 11 and the inner barrel shaft flange 10 in rigid contact is prevented.

### Embodiment VIII

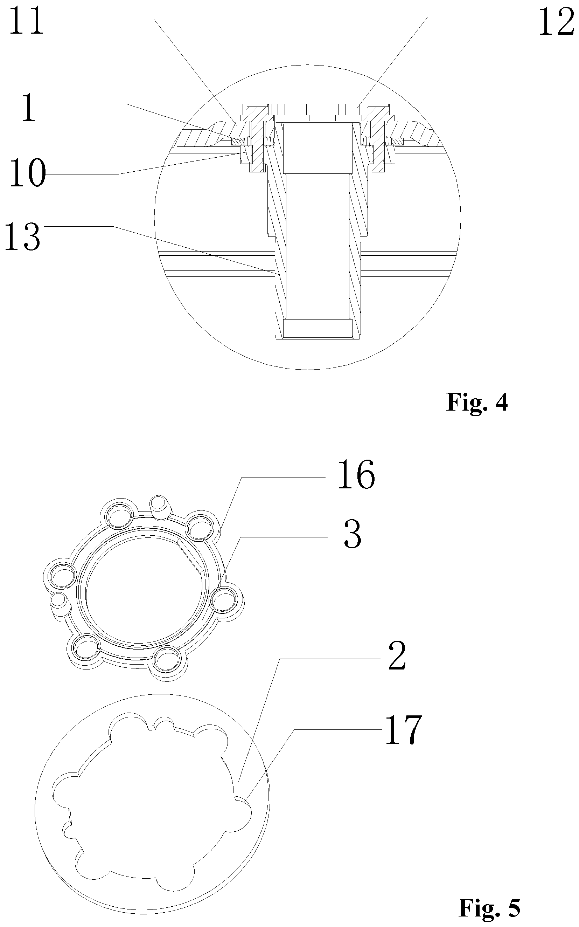

As shown in Fig. 5, in this embodiment, both the bolt through holes 6 and the positioning columns 8 partially protrude from an outer ring of the annular rubber body to form arc-shaped protrusions 16. And a plurality of arc-shaped notches 17 matched with the arc-shaped protrusions 16 at the outer ring of the annular rubber body are formed in the inner ring of the metallic framework 2.

Further, an area of contact between the metallic framework 2 and the rubber gasket 3 is further increased. Thus, the bonding strength between the metallic framework 2 and the rubber gasket 3 is improved.

Preferably, in this embodiment, the positioning structures 8 have a height of 6mm to 10mm.

### Embodiment IX

As shown in Fig. 7, in this embodiment, during the mounting of the inner barrel shaft seal mounting structure of the washing machine, firstly, the inner barrel shaft 13 penetrates through an outer barrel bottom, the inner barrel shaft 13 and the outer barrel bottom are sealed. A reducer and a motor are mounted at the outer barrel bottom. Then, the composite sealing gasket 1 is positioned on the inner barrel shaft flange 10. Then, the inner barrel flange 11 fixed to an inner barrel bottom is placed on the composite sealing gasket 1. And finally, bolts 12 are mounted and fixed. During mounting, the composite sealing gasket 1 is positioned on the inner barrel shaft flange 10 through the positioning columns 8, and the inner barrel flange 11, the composite sealing gasket 1 and the inner barrel shaft flange 10 are relatively fixed by using the bolts 12 to penetrate through the inner barrel flange 11, the composite sealing gasket 1 and the inner barrel shaft flange 10 sequentially.

Preferably, in this embodiment, the positions of the inner barrel shaft flange 10 and the composite sealing gasket 1 are relatively fixed after the convex ends of the positioning structures 8 are matched with the positioning holes 18 of the inner barrel shaft flange. The bolt holes of the inner barrel shaft flange 10 and corresponding bolt through holes of the composite sealing gasket 1 are in one-to-one correspondence and cannot relatively move. Then, corresponding positions of the bolt holes of the inner barrel flange 11 and the bolt through holes 6 of the composite sealing gasket are adjusted, and the bolts 12 are mounted after adjustment is completed. The positioning structures 8 of the composite sealing gasket have the functions that relative positions of the composite sealing gasket 1 and the inner barrel shaft flange 10 are fixed to facilitate mounting. A relative area of contact between the composite sealing gasket 1 and the inner barrel shaft flange 10 is reduced. The abrasion caused by relative movement between the composite sealing gasket 1 and the inner barrel shaft flange 10 is alleviated, so that the service life of the composite sealing gasket 1 is prolonged.

During operation of the washing machine, the motor drives the inner barrel shaft 13 to rotate and thus drives the inner barrel to rotate. In order to prevent water in the inner barrel from leaking into the outer barrel through the inner barrel shaft 13, simultaneously bear radial forces and axial forces of the inner barrel shaft flange 10 and the inner barrel flange 11 and prevent the inner barrel shaft flange 10 and the inner barrel flange 11 from loosening, shaking and water-leaking problems, the present invention adopts the composite sealing gasket 1 which can be used for effectively solving the above-mentioned problems.

What described above are only preferred embodiments of the present invention, and it should be noted that, without departing from the principle of the present invention, various changes and modifications made by those skilled in the art shall all be covered within the scope of the technical solution of the present invention.

## Claims

1. An inner barrel shaft seal mounting structure of a washing machine, comprising an inner barrel flange arranged at an inner barrel bottom and an inner barrel shaft, and an upper end part of the inner barrel shaft being a flange mounting structure, and the inner barrel flange being in seal connection with an inner barrel shaft flange; wherein,
a composite sealing gasket is arranged between the inner barrel flange and the inner barrel shaft flange, and the composite sealing gasket comprises a metallic framework and a rubber gasket which are combined into one piece through vulcanization.

2. The inner barrel shaft seal mounting structure of the washing machine according to claim 1, **characterized in that** the composite sealing gasket is of a flat annular structure, a center hole is formed in the middle of the composite sealing gasket, and a first annular convex rib is arranged on an upper surface and/or a lower surface of the composite sealing gasket around the center hole.

3. The inner barrel shaft seal mounting structure of the washing machine according to claim 1, **characterized in that** a plurality of bolt through holes are distributed in a circumference direction of the composite sealing gasket, a second annular convex rib is arranged at an outer ring of each bolt through hole on an upper surface and/or a lower surface of the composite sealing gasket,
preferably, a segmented convex rib is connected between every two adjacent second annular convex ribs, and
more preferably, circumference traces of a plurality of segmented convex ribs are same and are concentric with the first annular convex rib.

4. The inner barrel shaft seal mounting structure of the washing machine according to claim 1, **characterized in that** a positioning structure is arranged between the composite sealing gasket and the inner barrel shaft flange, preferably, the positioning structure is a positioning column which protrude from a surface of the composite sealing gasket, and a positioning hole matched with the positioning column is formed in the inner barrel shaft flange.

5. The inner barrel shaft seal mounting structure of the washing machine according to claim 1, **characterized in that** both the metallic framework and the rubber gasket are of annular structures, and are concentrically arranged and bonded together with each other along the radial direction through vulcanization.

6. The inner barrel shaft seal mounting structure of the washing machine according to claim 5, **characterized in that** the rubber gasket is arranged at an inner ring of the metallic framework and forms a lining of the metallic framework, and the rubber gasket and the metallic framework are combined to form the composite sealing gasket with the flat annular structure.

7. The inner barrel shaft seal mounting structure of the washing machine according to claim 6, **characterized in that** the inner ring of the metallic framework serves as a combination part which is bonded to the rubber gasket through vulcanization, and the combination part is formed by multiple sections of curves which are successively connected.

8. The inner barrel shaft seal mounting structure of the washing machine according to claim 6, **characterized in that** the rubber gasket comprises an annular rubber body,
an outer ring of the annular rubber body is bonded to the metallic framework through vulcanization,
an inner ring of the annular rubber body forms a center hole,
a first annular convex rib is arranged on an upper surface and/or a lower surface of the annular rubber body around the center hole,
a plurality of bolt through holes are distributed outside the first annular convex rib in a circumference direction, and
a second annular convex rib is arranged at an outer ring of each bolt through hole on the upper surface and/or lower surface of the annular rubber body.

9. The inner barrel shaft seal mounting structure of the washing machine according to claim 8, **characterized in that** a segmented convex rib is connected between every two adjacent second annular convex ribs, and preferably, circumference traces of a plurality of segmented convex ribs are same and are concentric with the first annular convex rib.

10. The inner barrel shaft seal mounting structure of the washing machine according to claim 8, **characterized in that** horizontal planes of the upper and lower surfaces of the annular rubber body are same with that of the upper and lower surfaces of the metallic framework respectively,
there is a smooth transition at a vulcanization bonding position,
the first annular convex rib and the second annular convex ribs protrude from the surface of the composite sealing gasket, and
preferably, protruding heights of the first annular convex rib and second annular convex ribs are same .

11. The inner barrel shaft seal mounting structure of the washing machine according to claim 8, **characterized in that** at least one positioning column protrudes from the lower surface of the annular rubber body, and a positioning hole matched with the positioning column is formed in the inner barrel shaft flange and is located between two bolt through holes.

12. The inner barrel shaft seal mounting structure of the washing machine according to claim 8, **characterized in that** both the bolt through hole and the positioning column partially protrude from an outer ring of the annular rubber body to form arc-shaped protrusions, and
a plurality of arc-shaped notches matched with the arc-shaped protrusions at the outer ring of the annular rubber body are formed in the inner ring of the metallic framework.
